# EUROPÄISCHE PATENTSCHRIFT

(11) **EP 2 105 277 B1**
(45) Veröffentlichungstag und Bekanntmachung des Hinweises auf die Patenterteilung: **26.12.2012**
(21) Anmeldenummer: 08005454.7
(22) Anmeldetag: 25.03.2008
(51) Int. Cl.: B29C 47/08, B29C 33/72, C11D 3/14

(54) **Reinigungsmittel für Vorrichtungen zur Kunststoffverarbeitung oder Kunststoffherstellung, dessen Verwendung, Verfahren zur Herstellung sowie Verfahren zum Reinigen**
Cleaning agent for devices meant for processing or production of plastic, usage of same, method for production and method for cleaning
Produit de nettoyage pour dispositifs de traitement de matière synthétique ou de fabrication de matière synthétique, son utilisation, son procédé de fabrication et procédé de nettoyage

(43) Veröffentlichungstag der Anmeldung: 30.09.2009
(73) Patentinhaber: Granula Polymer GmbH, 64823 Groß-Umstadt/Heubach (DE)
(72) Erfinder: Christ, Hubert, 64823 Groß-Umstadt/Heubach (DE)
(74) Vertreter: Louis Pöhlau Lohrentz

(56) Entgegenhaltungen:
- WO-A-95/17268
- WO-A-2006/059811
- DE-A1- 10 334 293
- DE-A1- 19 829 786
- US-A- 3 042 622

## Beschreibung

Die Erfindung betrifft ein Reinigungsmittel zur Reinigung von Vorrichtungen zur Kunststoffverarbeitung oder Kunststoffherstellung. Die Erfindung betrifft ferner die Verwendung eines solchen Reinigungsmittels als auch ein Verfahren zur Herstellung des Reinigungsmittels. Ferner betrifft die Erfindung ein Verfahren zum Reinigen einer Vorrichtung zur Kunststoffverarbeitung oder Kunststoffherstellung.

Die Reinigung von Vorrichtungen zur Herstellung oder Verarbeitung von Kunststoffen, wie beispielsweise Extrudern oder Spritzgießmaschinen, ist aufwendig und bislang noch nicht zufriedenstellend gelöst. Eine Reinigung dieser Vorrichtungen zur Herstellung bzw. Verarbeitung von Kunststoffen ist regelmäßig dann erforderlich, wenn eine neue Kunststoffzusammensetzung hergestellt bzw. verarbeitet werden soll, damit eine Verunreinigung des neuen Kunststoffes durch den davor hergestellten oder verarbeiteten Kunststoff vermieden wird.

Eine Reinigung der Vorrichtungen kann dadurch erfolgen, dass die Vorrichtung zerlegt und mechanisch gereinigt wird. Eine solche Vorgehensweise ist arbeits- und zeitaufwendig und führt zu einem erheblichen Produktionsausfall.

Eine weitere Möglichkeit besteht in der Verwendung von Reinigungsmassen, die durch die Vorrichtungen gefördert werden und dabei die verbliebenen Kunststoffreste von der Vorrichtung lösen und aus der Vorrichtung transportieren sollen.

Die WO 00/37236 offenbart eine Reinigungsmasse, die eine Mischung aus diskreten, plastisch deformierbaren Teilchen aus einem ersten Thermoplasten und einem zweiten amorphen oder teilkristallinen Thermoplasten mit einem Schmelzpunkt, der unterhalb des Schmelzpunktes des ersten Thermoplasten liegt, enthält. Es hat sich gezeigt, dass die Reinigungsmasse gemäß der Lehre der WO 00/37236 keine zuverlässige Reinigung von Vorrichtungen zur Kunststoffherstellung bzw. Kunststoffverarbeitungen erlaubt.

Die DE 103 34 293 A1 offenbart eine Reinigungszusammensetzung für kunststoffverarbeitende Maschinen auf Basis von Tensiden, Wasser und Polymeren. Auch bei dieser Reinigungszusammensetzung besteht der Nachteil, dass ebenfalls keine zuverlässige Reinigung von Vorrichtungen zur Herstellung und Verarbeitung von Kunststoffen möglich ist.

Die DE 42 02 618 A1 offenbart eine weitere Reinigungszusammensetzung, die Ethylen-Acryl-Copolymere, ein neutrales Salz von organischer Sulfonsäure sowie basisches Magnesiumcarbonat, Magnesiumhydroxid, Kaliumcarbonat und/oder Zinkcarbonat umfasst. Auch dieses Reinigungsmittel erlaubt es nicht, eine zuverlässige Reinigung einer Vorrichtung zur Herstellung oder Verarbeitung von Kunststoffen zu bewirken.

Die WO 2006/059811 A1 betrifft die Bereitstellung eines Waschmittels, das 0,1 bis 15 Gewichtsteile eines sauren wasserlöslichen Polymers, 5 bis 20 Gewichtsteile eines anionischen oberflächenaktiven Mittels, 10 bis 70 Gewichtsteile eines alkalischen Gerüststoffes und 0.5 bis 20 Gewichtsprozent einer organischen Säure enthält, wobei die organische Säure so beschichtet ist, dass sie von dem alkalischen Gerüsfistoff getrennt ist.

Die US 3,042,622 betrifft eine in Wasser gelöste abrasive Reinigungszusammensetzung.

Die WO 95/17268 A1 betrifft ebenfalls eine abrasive Zusammensetzung, die abraslves Pulver, wenigstens ein Harz und wenigstens ein Copolymer aus einem Otefin und einem Acrylat oder Methacrylat enthält.

Es hat sich herausgestellt, dass beispielsweise bei Extrudern nur eine ungenügende Reinigung der Schneckenwelle, insbesondere auf der nichtfördernden Seite des Schneckenstegs, also der zur Förderrichtung des Kunststoffmaterials abgewandten Seite des Schneckenstegs der Schneckenwelle, erfolgt, wenn die vorgenannten Reinigungsmassen oder -zusammensetzungen verwendet werden.

Aufgabe der vorliegenden Erfindung ist es, ein Reinigungsmittel bereitzustellen, das eine zuverlässige Reinigung von Vorrichtungen zur Herstellung oder Verarbeitung von Kunststoffen ermöglicht. Ferner soll das Reinigungsmittel über einen längeren Zeitraum lagerfähig sein, ohne dass es aufgrund der längeren Lagerung zu einer Abnahme der Reinigungskraft des Reinigungsmittels kommt. Weiterhin ist es wünschenswert, ein Reinigungsmittel bereitzustellen, das auch die Reinigung schwer zugänglicher Bereiche in einer Vorrichtung zur Herstellung oder Verarbeitung von Kunststoffen ermöglicht.

Die der vorliegenden Erfindung zugrunde liegende Aufgabe wird durch Bereitstellen eines Reinigungsmittels gemäß Anspruch 1 gelöst.

Bevorzugte Weiterbildungen des erfindungsgemäßen Reinigungsmittels sind in den Unteransprüchen 2 bis 12 angegeben.

Die Aufgabe der Erfindung wird ferner durch Verwendung eines Reinigungsmittels gemäß Anspruch 13 zur Reinigung von Vorrichtungen zur Kunststoffherstellung oder Kunststoffverarbeitung, insbesondere von Extrudern und Spritzgießmaschinen, gelöst.

Die der Erfindung zugrundeliegende Aufgabe wird auch durch Bereitstellung eines Verfahrens zum Reinigen einer Vorrichtung zur Kunststoffherstellung oder Kunststoffverarbeitung, insbesondere von Extrudern und Spritzgießmaschinen, gemäß Anspruch 14 gelost.

Eine bevorzugte Weiterbildung des erfindungsgemäßen Verfahrens ist im Unteranspruch 15 angegeben.

Die Aufgabe der Erfindung wird schließlich durch Bereitstellung eines Verfahrens zur Herstellung des erfindungsgemäßen Reinigungsmittels gelöst, wobei mineralische Partikel, kristalline freie Säuren sowie organisches Polymer und optional Additive unter Bereitstellung des erfindungsgemäßen Reinigungsmittels miteinander vermengt werden, wobei die mineralischen Partikel und/oder die kristalline freie Säure wenigstens teilweise eine Verkapselung aufweisen.

Eine bevorzugte Ausführungsform ist in Anspruch 17 angegeben.

Es wurde festgestellt, dass die Kombination von mineralischen Partikeln, freier Säure sowie von organischem Polymer eine gute Reinigungskraft bei der Reinigung von Vorrichtungen zur Herstellung oder Verarbeitung von Kunststoffen aufweisen.

Es hat sich jedoch gezeigt, dass die Reinigungskraft eines solchen Reinigungsmittels unter Umgebungsbedingungen innerhalb einer Woche abnimmt, wenn Säure und mineralische Partikel nebeneinander in einem Reinigungsmittel vorliegen. Insbesondere aufgrund der Luftfeuchtigkeit kommt es bereits nach kurzer Lagerung zu einer teilweisen Neutralisierung der Säure durch alkalische Bestandteile der mineralischen Partikel, d.h. es kommt teilweise zu einer Salzbildung aus Säure und mineralischen Partikeln, wodurch die Reinigungskraft des Reinigungsmittels signifikant herabgesetzt wird.

Die Erfinder haben nun überraschenderweise herausgefunden, dass ein hervorragendes Reinigungsmittel erhalten werden kann, wenn als Säure kristalline freie Säure verwendet wird und die mineralischen Partikel und/oder die kristalline freie Säure wenigstens teilweise eine Verkapselung aufweisen. Gemäß einer bevorzugten Ausführungsform der Erfindung sind die mineralischen Partikel und/oder die kristalline freie Säure im wesentlichen vollständig, vorzugsweise vollständig, verkapselt.

Erfindungsgemäß können entweder die mineralischen Partikel oder die kristalline freie Säure verkapselt werden. Selbstverständlich ist es auch möglich, sowohl die mineralischen Partikel als auch die kristalline freie Säure zu verkapseln. Aufgabe der Verkapselung ist es, die mineralischen Partikel und die kristalline freie Säure voneinander zu trennen, sodass die mineralischen Partikel und die kristalline freie Säure während der Lagerung oder einem Transport nicht miteinander in Kontakt kommen und es mithin unter Einwirkung von Umgebungsfeuchtigkeit nicht zur Salzbildung aus Säure und mineralischen Partikeln kommt.

Die Verkapselung ist eine Beschichtung, die auf den mineralischen Partikeln und/oder auf den kristallinen freien Säuren aufgebracht ist. Eine solche Verkapselung kann durch herkömmliche Beschichtungsverfahren, beispielsweise in einer Wirbelschicht aufgebracht werden. Hierbei werden die mineralischen Partikel oder die kristalline freie Säure in einer Wirbelschicht fluidisiert und die Beschichtung durch Einsprühen einer Beschichtungsflüssigkeit aufgesprüht. Die Beschichtung wird auf den Partikeln in der Wirbelschicht getrocknet, wodurch die Partikel verkapselt werden. Eine Verkapselung der mineralischen Partikel oder der kristallinen freien Säure kann auch durch den Wurster-Prozess oder in einem Trommel-Coater aufgebracht werden. Entsprechende Vorrichtungen zur Verkapselung können bei der Fa. Glatt Ingenieurtechnik GmbH, Nordstraße 12, 99427 Weimar/Deutschland bezogen werden, wobei die Verkapselung gemäß Herstellerangaben erfolgt.

Die Verkapselung kann auch auf die mineralischen Partikel oder auf die kristalline freie Säure aufgebracht werden, indem das Beschichtungsmaterial und die zu beschichtenden Partikel in einen Extruder gegeben und stranggranuliert werden. Als Extruder werden vorzugsweise Ein- oder Zweischneckenextruder verwendet. Solche Verfahren werden auch als Masterbatchverfahren bezeichnet.

Die Schichtdicke der zur Verkapselung aufgebrachten Beschichtung liegt üblicherweise in einem Bereich von 5 nm bis 500 µm, vorzugsweise von 10 nm bis 100 µm, weiter bevorzugt von 20 nm bis 5 µm.

Die Schichtdicke der Verkapselung kann durch Aufbringung der Menge an Verkapselungsmaterial definiert eingestellt werden.

Da die verkapselten mineralischen Partikel bzw. die verkapselte kristalline freie Säure während der Lagerung und/oder beim Transport keiner großen mechanischen Belastung ausgesetzt sind, kann die Verkapselung durchaus eine dünne Schichtdicke aufweisen.

Die Verkapselung weist gegenüber Feuchtigkeit eine ausreichende Beständigkeit auf, so dass eine Salzbildung zwischen mineralischen Partikeln bzw. Komponenten und Säure vermieden wird. Vorzugsweise ist die Verkapselung gegenüber Feuchtigkeit im wesentlichen beständig, weiter bevorzugt ist die Verkapselung gegenüber Feuchtigkeit beständig.

Wenn das erfindungsgemäße Reinigungsmittel nicht als freies Pulver, sondern in einer aggregierten oder komprimierten Form vorliegen soll, beispielsweise als Granulat, Pellets, Tabletten, Briketts oder Würstchen, dann wird die Schichtdicke der Verkapselung so gewählt, dass sie den Vorgang des Granulierens, Tablettierens, Brikettierens oder Extrudierens ohne wesentliche Beschädigung, vorzugsweise ohne Beschädigung, der Verkapselung übersteht.

Vorzugsweise liegt das erfindungsgemäße Reinigungsmittel als Granulat vor. Weiterhin ist bevorzugt, dass das Granulat in leicht komprimierter Form vorliegt, d.h. in der Form von aggregierten Granulatpartikeln.

Bei Förderung des erfindungsgemäßen Reinigungsmittels durch die Vorrichtung zur Herstellung oder Verarbeitung von Kunststoffen wird dann die Verkapselung unter den dort herrschenden Druck- und/oder Temperaturbedingungen aufgebrochen, wobei die mineralischen Partikel und/oder die kristalline freie Säure wenigstens teilweise, vorzugsweise im wesentlichen vollständig, freigesetzt werden.

Die mineralischen Partikel wirken während der Förderung des Reinigungsmittels durch die zu reinigende Vorrichtung abrasiv und entfernen abgelagerte Stoffrückstände. Die kristalline freie Säure unterstützt den Prozess des Reinigens durch die Säureeinwirkung, indem Kunststoffrückstände erweicht, angelöst oder gelöst werden. Das organische Polymer in dem erfindungsgemäßen Reinigungsmittel entfaltet eine "Radiergummi"-artige Wirkung und entfernt ebenfalls Kunststoffablagerungen in der zu reinigenden Vorrichtung. Ebenfalls nimmt das organische Polymer die durch die Einwirkung von mineralischen Partikeln und/oder kristalliner Säure entfernten Kunststoffrückstände auf, sodass diese Kunststoffrückstände von dem organischen Polymer durch die Vorrichtung nach außen getragen werden, wodurch die Vorrichtung zuverlässig gereinigt wird.

Als mineralische Partikel können in dem erfindungsgemäßen Reinigungsmittel grundsätzlich jegliche Art von mineralischen Partikeln verwendet werden.

Wesentliche Parameter zur Auswahl der mineralischen Partikel sind deren Verfügbarkeit bzw. der Preis sowie die Härte der Partikel. Die Härte der mineralischen Partikel wird dabei so gewählt, dass die Oberfläche der zu reinigenden Vorrichtung nicht durch die abrasive Wirkung der mineralischen Partikel beschädigt wird, sondern lediglich die Kunststoffrückstände abgetragen werden.

Vorzugsweise werden natürliche und/oder synthetische preiswerte Mineralien verwendet.

Beispielsweise können Gesteinsstaub, Gesteinspartikel, Silikate, vorzugsweise Talk, Speckstein, Schwerspat (BaSO₄) sowie Marmor und/oder Kreide in partikulärer Form verwendet werden.

Als Silikat kann bspw. Lithiumaluminiumsilikat, vorzugsweise mit mittlerer Partikelgröße aus dem Bereich von 10 bis 50 µm, verwendet werden.

Der Schwerspat weist vorzugsweise eine mittlere Partikelgröße aus dem Bereich von 10 bis 50 µm auf.

Äußerst bevorzugt werden Marmorpartikel und/oder Kreidepartikel als mineralische Partikel verwendet, die vorzugsweise eine mittlere Partikelgröße von 1 bis 50 µm, weiter bevorzugt von 5 bis 10 µm, aufweisen.

Gemäß einer bevorzugten Weiterbildung der Erfindung sind die mineralischen Partikel wenigstens teilweise alkalische mineralische Partikel. Weiterhin ist bevorzugt, dass die mineralischen Partikel im wesentlichen alkalische mineralische Partikel, vorzugsweise ausschließlich alkalische mineralische Partikel, sind.

Als alkalische mineralische Partikel werden vorzugsweise Oxide, Hydroxide Carbonate und/oder Phosphate von Alkali- und/oder Erdalkalimetallen und/oder Aluminium, bevorzugt Kreide- und/oder Marmorpartikel, verwendet.

Als sehr geeignet haben sich Natriumoxid, Natriumhydroxid, Natriumcarbonat, Natriumphosphat, Kaliumoxid, Kaliumhydroxid, Kaliumcarbonat, Kaliumphosphat, Magnesiumoxid, Magnesiumhydroxid, Magnesiumcarbonat, Magnesiumphosphat, Calciumoxid, Calciumhydroxid, Calciumcarbonat, Calciumphosphat, Bariumoxid, Bariumhydroxid, Bariumcarbonat, Bariumphosphat, Aluminiumoxid, Aluminiumhydroxid, Aluminiumcarbonat, Aluminiumphosphat sowie Gemischen davon.

Auch Zinkoxid, Zinkhydroxid, Zinkcarbonat und/oder Zinkphosphat haben sich als sehr geeignet erwiesen.

Es hat sich gezeigt, dass die Verwendung von alkalischen mineralischen Partikeln von Vorteil ist, da während der Reinigung der zu reinigenden Vorrichtung überschüssige freie Säure von diesen alkalischen mineralischen Partikeln neutralisiert wird. Eine Neutralisierung von überschüssige kristalliner freier Säure während und insbesondere nach der Reinigung ist von Vorteil, da hierdurch eine Korrosion der Oberflächen der zu reinigenden Vorrichtung durch übermäßige Säureeinwirkung verhindert wird.

Da die mineralischen Partikel und/oder die kristalline freie Säure erfindungsgemäß wenigstens teilweise, vorzugsweise im wesentlichen vollständig, verkapselt sind, erfolgt keine Neutralisierung bzw. Salzbildung der kristallinen freien Säure während der Lagerung und/oder dem Transport des Reinigungsmittels unter Umgebungsbedingungen. Eine Neutralisierung kann erst nach Freisetzung der mineralischen Partikel und/oder der kristallinen freien Säure während und insbesondere nach der Reinigung erfolgen.

Es hat sich überraschend gezeigt, dass eine Neutralisierung erst dann erfolgt, wenn die kristalline freie Säure lokal im Überschuss vorliegt, wodurch die Oberflächen der zu reinigenden Vorrichtung vor übermäßiger Säureeinwirkung und mithin vor Korrosion geschützt werden.

Gemäß einer bevorzugten Weiterbildung der Erfindung weisen die alkalischen mineralischen Partikel wenigstens teilweise, vorzugsweise im wesentlichen vollständig, eine Verkapselung auf.

Gemäß einer weiteren Weiterbildung der Erfindung liegt die kristalline freie Säure als kristalline freie organisch-chemische Säure vor.

Als kristalline freie organisch-chemische Säure können auch aromatische Sulfonsäuren wie beispielsweise Benzolsulfonsäure, Toluolsulfonsäure, vorzugsweise p-Toluolsulfonsäure, verwendet werden.

Gemäß einer sehr bevorzugten Ausführungsform der vorliegenden Erfindung umfasst oder ist die kristalline freie Säure kristalline freie Carbonsäure. Als sehr geeignet haben sich hierbei kristalline freie organische Mono- und/oder Polycarbonsäuren, insbesondere Di- und/oder Tricarbonsäuren, erwiesen.

Als Monocarbonsäuren haben sich beispielsweise Caprinsäure, Laurinsäure, Myristinsäure, Palmitinsäure, Margarinsäure, Stearinsäure, Arachinsäure, Behensäure, Lignocerinsäure, Cerotinsäure oder deren Gemische erwiesen.

Als Dicarbonsäuren haben sich als sehr geeignet Oxalsäure, Malonsäure, Tartronsäure, Bernsteinsäure, Glutarsäure, Adipinsäure, Pimelinsäure, Korksäure, Azelainsäure, Sebacinsäure, Weinsäure, Äpfelsäure, α-Ketoglutarsäure, Oxalessigsäure, ortho-Phthalsäure, Isophthalsäure, Terephthalsäure, Glutaminsäure, Asparaginsäure, Fumarsäure, Maleinsäure oder deren Gemische erwiesen.

Als Tricarbonsäuren haben sich als sehr geeignet Agaricinsäure, Zitronensäure, 1,2,3-Propantricarbonsäure, Hemimellithsäure, Trimellithsäure Trimesinsäure oder deren Gemische erwiesen.

Es können auch aromatische Carbonsäuren wie Benzoesäure, Nicotinsäure, Salicylsäure oder deren Gemische verwendet werden.

Selbstverständlich können auch Gemische von Mono- und Polycarbonsäuren, insbesondere der vorgenannten Säuren, verwendet werden.

Vorzugsweise wird als kristalline freie Säure erfindungsgemäß kristalline freie Zitronensäure verwendet.

Gemäß einer weiteren bevorzugten Ausführungsform weist die kristalline freie Säure wenigstens teilweise eine Verkapselung auf. Vorzugsweise liegt die kristalline freie Säure im wesentlichen, vorzugsweise vollständig, verkapselt vor.

Bei einer äußerst bevorzugten Form des erfindungsgemäßen Reinigungsmittels werden als mineralische Partikel Kreide und/oder Marmor und als kristalline freie Säure Zitronensäure verwendet. Vorzugsweise liegt dabei die Zitronensäure in verkapselter Form und die Kreide- und/oder Marmorpartikel in unverkapselter Form vor.

Gemäß einer weiteren bevorzugten Ausführungsform umfasst oder besteht die Verkapselung aus organischem Polymer und/oder Wachs.

Als Polymer kann jegliches organisches Polymer verwendet werden, das eine zuverlässige Verkapselung von mineralischen Partikeln und/oder kristalliner freier Säure erlaubt und einen ausreichenden Schutz gegenüber Feuchtigkeit bewirkt.

Zur Verkapselung werden vorzugsweise folgende Polymere verwendet:

PE-LDD (lineares Polyethylen mit niedriger Dichte), PE-LD (Polyethylen mit niedriger Dichte), PE-HD (Polyethylen mit hoher Dichte), niedermolekulares PP-HOMO (niedermolekulares Polypropylen-Homopolymer), niedermolekulares PP-COPO (niedermolekulares Polypropylen-Copolymer), EVA (Ethylen/Vinylacetat-Copolymer, E/EA (Ethylen/Ethylacrylat-Copolymer, E/BA (Ethylen/Butylacrylat-Copolymer), E/EMA (Ethylen/Ethylen-Methacrylat-Copolymer), E/AA (Ethylen/Acrylsäure-Copolymer), E/MAA (Ethylen/Methacrylsäure-Copolymer) oder Mischungen davon.

Die Polymere weisen vorzugsweise ein Molekulargewicht in einem Bereich von 10.000 bis 400.000 g/mol, weiter bevorzugt von 100.000 bis 200.000 g/mol, auf. Die vorgenannten Polymere werden vorzugsweise durch Stranggranulation auf die zu beschichtenden Partikel aufgebracht.

Zur Verkapselung werden vorzugsweise folgende Wachse verwendet:

C28 - C32 Montansäureester, insbesondere Montansäureethylenglykolester, Butylstearat, Glycerinmonooleat, Montansäureglycerinester und/oder Montansäurepentaerythritester, Metallseifen, vorzugsweise Calciumstearat, Zinkstearat, PE-Wachse (Polyethylenwachse), Polypropylenwachse (niedermolekular), vorzugsweise niedermolekulare lineare und/oder verzweigte PE-Wachse, natürliche Paraffine, synthetische Paraffine oder Mischungen davon.

Die Wachse werden vorzugsweise durch ein Wirbelschichtverfahren, bspw. Sprühgranulation, auf die zu beschichtenden Partikel aufgebracht.

Als sehr geeignet hat sich zur Verkapselung Polyethylen erwiesen. Vorzugsweise wird zur Verkapselung LDPE (Polyethylen mit niedriger Dichte) verwendet.

Bei dem organischen Polymer in dem erfindungsgemäßen Reinigungsmittel kann es sich um ein Polymer oder um ein Gemisch mehrerer Polymere handeln.

Als organisches Polymer werden in dem Reinigungsmittel vorzugsweise folgende Polymere verwendet:

Thermoplastische funktionalisierte Styrol-Olefin-Blockcopolymere, funktionalisierte Styrol-Ethylen-Ethylen-Propylen-Styrol-Blockcopolymere, funktionalisierte Styrol-Ethylen-Butadien-Styrol-Blockcopolymer, funktionalisierte Styrol-Olefin-Blockcopolymere, thermoplastische Elastomere (TPE), thermoplastische Olefine (TPO), ganz oder teilweise vernetzter Ethylen-Propylen-Dien-Kautschuk (EPDM) gegebenenfalls mit Weichmacheröl versetzt.

Als EPDM Kautschuk kann grundsätzlich jedes beliebige Dien eingesetzt werden. Als Dien-Monomere finden vorwiegend cis,cis-1,5-Cyclooctadien, exo-Dicyclopentadien, endo-Diclyclopentadien, 1,4-Hexadien, 1,3 Butadien und 5-Ethyliden-2-norbonen Verwendung, welche teilweise vernetzt sein können.

Ferner können nicht-olefinische Thermoplaste, thermoplastische Polyurethan-Elastomere, thermoplastische Polyetherurethan-Elastomere, thermoplastische Polyester, thermoplastische Polyesterester-Elastomere, thermoplastische Polyetherester-Elastomere, Polyetheramid-Elastomere, thermoplastische Polyamide, thermoplastische Polycarbonate, thermoplastische Polyacrylate, Acrylatkautschuke, Styrol-Acrylnitril/Acrylatkautschuke (ASA), Acrylnitril-Butadien-Styrol-Kautschuke (ABS) und/oder Acrylnitril-Butadien-αMethyl-Styrol-Kautschuke (ABαMS), Methacrylat-Butadien-Styrol (MBS), Methyl-Methacrylat-Acrylnitril-Butadien-Styrol (MABS), funktionalisiertes EPDM bzw. Ethylen-Propylen-Kautschuk (EPM), funktionalisierte Polyolefine, thermoplastische funktionalisierte Styrol-Olefin-Blockcopolymere, funktionalisierte Styrol-Ethylen-Ethylen-Propylen-Styrol-Blockcopolymere, funktionalisierte Styrol-Ethylen-Butadien-Styrol-Blockcopolymere als organisches Polymer oder Gemische davon verwendet werden. Die vorgenannten organischen Polymere können auch ein Weichmacheröl aufweisen.

Ferner können Silikonkautschuke mit propfaktiven Stellen, wie in der DE-A 37 04 657 und in der EP-A 0 235 690 beschrieben sind, verwendet werden.

Auch können HDPE (Polyethylen hoher Dichte), LDPE, LLDPE (Polyethylen mit niedriger Dichte und linearer Struktur), Polypropylen-Homopolymer, Polypropylen-Copolymer als organisches Polymer verwendet werden.

Weiterhin können Polyamide aus der folgenden Gruppe verwendet werden: PA 6, PA6.6, PA11, PA12, PA12 T, PA4.6, PA 6.9, PA6.10, PA6.12, PA10.10, PA MXD 6 (aus m-Xylylen-diamin + Adipinsäure), PA6I (aus Hexamethylendiamin + Isophthalsäure), PA PACM12 (aus Diaminodicyclohexylmethan + Dodecansäure) und/oder Copolymere davon.

Ebenfalls können Dodecansäure und/oder Copolymere davon, Polyester, insbesondere Polybutylentherephthalat (PBTP), Polyethylentherephthalat (PETP), Polycarbonat (PC) oder Mischungen hiervon, Polyacetale und Celluloseester hiervon, teilaromatische Polyamide, insbesondere Polyetheretherketone, Polyetherketone, Polyethersulfone, Polyphenyloxide, Polyetherimide, Polyphenylensulfide, Polysulfone oder Mischungen hiervon, vinylaromatische Polymere, insbesondere Polyvinylchlorid (PVC), Polyvinylidenchlorid (PVDC), Polyvinylacetat (PVAC) oder Mischungen hiervon, Styrolmischungen, Styrolblends, insbesondere Polystyrol, Styrol-Acrylnitril (SAN), α-Methyl-SAN, Acrylnitril-Butadien-Styrol (ABS) oder Mischungen hiervon als organisches Polymer verwendet werden.

Vorzugsweise werden organische Polymere mit einer Shore A-Härte von 30 bis 90, weiter bevorzugt von 40 bis 80, verwendet.

Weiterhin ist bevorzugt, daß die organischen Polymere eine Bruchdehnung gemäß DIN-ISO 527-1/2 von 100 bis 1200 %, vorzugsweise von 150 bis 1000 %, noch weiter bevorzugt von 200 bis 800 %, aufweisen.

Äußerst bevorzugt werden als organische Polymere thermoplastische Polymere verwendet.

Vorzugsweise werden die mineralischen Partikel oder die kristalline freie Säure mit PE (Polyethylen) oder LDPE (Polyethylen niedriger Dichte) verkapselt bzw. beschichtet, sodass der Anteil der mineralischen Partikel bzw. der kristallinen freien Säure in einem Bereich von 60 bis 95 Gew.-% und der Anteil an Verkapselung bzw. Beschichtung in einem Bereich von 5 bis 40 Gew.-% liegt, wobei sich die Gew.-%-Angaben auf das Gesamtgewicht an mineralischen Partikeln bzw. Zitronensäure sowie Verkapselung bzw. Beschichtung bezieht.

Bei der vorzugsweise verwendeten verkapselten Tricarbonsäure, beispielsweise Zitronensäure, liegt der Anteil an Carbonsäure, vorzugsweise Zitronensäure, in einem Bereich von 70 bis 90 Gew.-%, vorzugsweise von 75 bis 80 Gew.-% und der Anteil der Verkapselung, vorzugsweise in Form von PE oder LDPE, in einem Bereich von 10 bis 30 Gew.-%, vorzugsweise von 25 bis 20 Gew.-%.

Gemäß einer Variante der vorliegenden Erfindung liegt der Anteil an mineralischen Partikeln in einem Bereich von 2 bis 70 Gew.-%, der Anteil an kristalliner Säure in einem Bereich von 0,05 bis 10 Gew.-%, der Anteil an Verkapselung in einem Bereich von 0,01 bis 10 Gew.-% und der Anteil an organischem Polymer in einem Bereich von 10 bis 97,94 Gew.-%, wobei sich die Gew.-% auf das Gesamtgewicht des Reinigungsmittels beziehen und insgesamt 100 Gew.-% ergeben.

Vorzugsweise liegt der Anteil an mineralischen Partikeln in einem Bereich von 5 bis 65 Gew.-%, der Anteil an kristalliner Säure in einem Bereich von 0,5 bis 8 Gew.-%, der Anteil an Verkapselung in einem Bereich von 0,1 bis 8 Gew.-% und der Anteil an organischem Polymer in einem Bereich von 19 bis 94,4 Gew.-%.

Gemäß einer weiteren Variante der Erfindung liegt der Anteil an mineralischen Partikeln in einem Bereich von 10 bis 60 Gew.-%, der Anteil an kristalliner Säure in einem Bereich von 1 bis 5 Gew.-%, der Anteil an Verkapselung in einem Bereich von 0,2 bis 5 Gew.-% und der Anteil an organischem Polymer in einem Bereich von 30 bis 88,8 Gew.-%. Vorzugsweise ist oder umfasst das organische Polymer ein oder mehrere thermoplastische Polymere.

Die vorstehend genannten Angaben in Gew.-% beziehen sich jeweils auf das Gesamtgewicht des Reinigungsmittels.

Vorzugsweise weisen die mineralischen Partikel eine mittlere Partikelgröße aus einem Bereich von 1 bis 1000 µm, vorzugsweise von 5 bis 500 µm, weiter bevorzugt von 10 bis 250 µm auf. Als sehr geeignet hat sich eine mittlere Partikelgröße von 15 bis 50 µm erwiesen.

Vorzugsweise weist die kristalline freie Säure eine mittlere Partikelgröße aus einem Bereich von 1 µm bis 10 mm, vorzugsweise von 100 µm bis 5 mm, weiter bevorzugt von 500 µm bis 3 mm auf.

Gemäß einer weiteren Variante kann das erfindungsgemäße Reinigungsmittel zusätzlich ein oder mehrere Additive umfassen. Beispielsweise können als Additive Treibmittel, Flammschutzadditive, Wärmestabilisatoren, Gleitmittel, Tenside, Korrosionsschutzmittel etc. verwendet werden.

Das erfindungsgemäße Reinigungsmittel kann auch weitere Zusätze enthalten, bspw. abrasiv wirkende Zusätze wie sphärische Körper, bspw. Keramikugeln, Stahlkugeln, Glaskugeln, etc.. Der durchschnittliche Kugeldurchmesser (Korngröße) liegt dabei vorzugsweise in einem Bereich von 5 µm bis 500 µm, weiter bevorzugt von 10 µm bis 100 µm, noch weiter bevorzugt von 20 µm bis 50 µm. Ein Kugeldurchmesser von 30 µm hat sich als sehr geeignet erwiesen. Vorzugsweise werden Glaskugeln verwendet. Der Anteil an sphärischen Körpern, vorzugsweise Glaskugeln, liegt vorzugsweise in einem Bereich von 1 bis 15 Gew.-%, weiter bevorzugt von 3 bis 10 Gew.-%, jeweils bezogen auf das Gesamtgewicht des Reinigungsmittels.

Erfindungsgemäß kann das Reinigungsmittel als Pulver, Granulat oder in kompaktierter Form vorliegen. Als kompaktierte Form liegt das erfindungsgemäße Reinigungsmittel vorzugsweise in Form von Pellets, Tabletten, Briketts oder Würstchen vor. Pellets können durch Pelletieren auf einem Pelletierteller erhalten werden. Die Tabletten oder Briketts können durch Pressen des Reinigungsmittels in entsprechende Pressformen erhalten werden. Die Bereitstellung des Reinigungsmittels in Würstchenform kann durch Extrudieren erhalten werden.

Vorzugsweise liegt das Reinigungsmittel als Granulat oder anderweitig kompaktierter Form vor, da das Reinigungsmittel in dieser Darreichungsform in staubarmer Form, vorzugsweise in staubfreier Form, vorliegt, wodurch die Handhabbarkeit und Arbeitssicherheit erhöht wird.

Das erfindungsgemäße Reinigungsmittel eignet sich insbesondere zur Verwendung bei der Reinigung von Vorrichtungen zur Kunststoffherstellung oder Kunststoffverarbeitung, insbesondere von Extrudern oder Spritzgießmaschinen.

Bei dem erfindungsgemäßen Verfahren wird das erfindungsgemäße Reinigungsmittel unter Druck- und/oder Temperaturerhöhung durch die zu reinigende Vorrichtung unter Aufbrechen der Verkapselung geführt oder gefördert, sodass die mineralischen Partikel und/oder die kristalline freie Säure wenigstens teilweise freigesetzt werden. Vorzugsweise ist die Freisetzung im wesentlichen vollständig.

Gemäß einer bevorzugten Variante des Reinigungsverfahrens ist die kristalline freie Säure eine kristalline organische Carbonsäure, die während des Reinigens der Vorrichtung zur Kunststoffherstellung oder Kunststoffverarbeitung wenigstens teilweise decarboxyliert, d.h. CO₂ abspaltet.

Es hat sich überraschend gezeigt, dass, wenn das erfindungsgemäße Reinigungsmittel organische Carbonsäuren enthält, vorzugsweise Polycarbonsäure wie Di- oder Tricarbonsäuren, es unter den Reinigungsbedingungen von erhöhtem Druck und/oder erhöhter Temperatur zu einer Decarboxylierung, mithin zu einer CO₂-Abspaltung kommt. Aufgrund der CO₂-Entstehung während des Reinigungsvorganges, schäumt das Reinigungsmittel in der zu reinigenden Vorrichtung auf und gelangt mithin auch in schwer zugängliche Bereiche. Es hat sich überraschenderweise herausgestellt, dass bei der Reinigung von Extrudern auch die nichtfördernde Seite des Schneckenstegs der Schneckenwelle zuverlässig gereinigt wird, da das erfindungsgemäße Reinigungsmittel unter CO₂-Abspaltung stark aufschäumt und mithin die mineralischen Partikel, das organische Polymer sowie die kristalline Säure in sämtliche Bereiche der zu reinigenden Vorrichtung fördert bzw. drückt.

Es hat sich überraschenderweise herausgestellt, dass eine besonders starke CO₂-Entwicklung entsteht, wenn Tricarbonsäuren, vorzugsweise Zitronensäure, zusammen mit Kreide oder Marmorpartikeln in dem Reinigungsmittel vorliegen.

Vorzugsweise liegt dabei die kristalline freie Säure, bevorzugt Tricarbonsäure, insbesondere bevorzugt Zitronensäure, in verkapselter Form vor, wobei die mineralischen Partikel, vorzugsweise Kreide und/oder Marmor, in unverkapselter Form in dem erfindungsgemäßen Reinigungsmittel vorliegen. Weiterhin ist bevorzugt, daß zusätzlich sphärische Körper, vorzugsweise Glaskugeln, wie oben spezifiziert, in dem erfindungsgemäßen Reinigungsmittel enthalten sind.

Da die kristalline freie Säure verkapselt ist, wird eine vorzeitige Reaktion zwischen der kristallinen freien Säure, beispielsweise Zitronensäure, und den mineralischen Partikeln, beispielsweise Kreide und/oder Marmor, während der Lagerung und dem Transport verhindert. Erst durch Aufbrechen der Verkapselung während des Förderns durch die zu reinigende Vorrichtung wird die kristalline freie Säure, vorzugsweise Zitronensäure, freigesetzt und gelangt in Kontakt mit den mineralischen Partikeln, vorzugsweise Kreide und/oder Marmorpartikeln, worauf es unter den erhöhten Druck- und/oder Temperaturbedingungen zu einer Decarboxylierung der Tricarbonsäure, vorzugsweise Zitronensäure, kommt und eine effektive Reinigung der zu reinigenden Vorrichtung erfolgt.

Selbstverständlich kann in dem erfindungsgemäßen Reinigungsmittel auch ein Gemisch verschiedener kristalliner freier Säuren verwendet werden.

Bei der Herstellung des erfindungsgemäßen Reinigungsmittels, werden mineralische Partikel, kristalline freie Säure sowie organisches Polymer und optional Additive miteinander unter Bereitstellung des Reinigungsmittels vermengt, wobei die mineralischen Partikel und/oder die kristalline freie Säure wenigstens teilweise eine Verkapselung aufweisen.

Die Verkapselung der mineralischen Partikel und/oder der kristallinen freien Säure erfolgt dabei vorzugsweise in einer Wirbelschicht, durch den Wurster-Prozess oder durch Trommel-Coating. Hierfür können beispielsweise die bei der Firma Glatt Ingenieurtechnik GmbH (siehe oben) erhältlichen Vorrichtungen verwendet werden. Die so verkapselten Partikel, vorzugsweise die verkapselte kristalline freie Säure, werden dann mit den weiteren Komponenten vorzugsweise in einem herkömmlichen Mischer miteinander vermengt. Nachfolgend kann das erfindungsgemäße Reinigungsmittel dann granuliert und/oder kompaktiert, beispielsweise tablettiert, pelletiert oder brikettiert oder in Würstchen überführt werden.

Gemäß einer weiteren Variante der Erfindung kann das erfindungsgemäße Reinigungsmittel zusammen mit dem Kunststoffmaterial oder Polymer, das nachfolgend in der gereinigten Vorrichtung zur Herstellung oder Verarbeitung von Kunststoffen hergestellt oder verarbeitet werden soll, verwendet werden. Das erfindungsgemäße Reinigungsmittel kann dabei mit dem gewünschten Kunststoff oder Polymer versetzt werden, bevor es als Reinigungsmittel verwendet wird. Es ist selbstverständlich auch möglich, das Polymer bzw. den Kunststoff, welches bzw. welcher auf der gereinigten Vorrichtung hergestellt oder verarbeitet werden soll, bei der Herstellung des erfindungsgemäßen Reinigungsmittels als organisches Polymer zu verwenden bzw. als weitere Komponente dem erfindungsgemäßen Reinigungsmittel zuzusetzen.

Auf diese Weise kann sichergestellt werden, dass nach dem Reinigungsprozess keine Rückstände verbleiben, die zu Verunreinigungen des nachfolgend hergestellten oder verarbeiteten Polymers oder Kunststoff führen. So kann die Vorrichtung bei einem Farb- oder Polymerwechsel zuverlässig gereinigt werden, sodass das nachfolgend hergestelltes oder verarbeitetes Polymer oder Kunststoff nicht verunreinigt wird.

Die Erfindung wird nachfolgend anhand von Beispielen anschaulich, die jedoch den Schutzumfang der vorliegenden Anmeldung nicht einschränken.

### Beispiele

### Beispiel 1

In einem Henschelmischer (100 l) wurden 25 kg Thermoflex S3002/60-12*800 (Fa. PTS Plastic - Technologie - Service, Marketing und Vertriebs GmbH, 91587 Adelshofen, Deutschland), 5 kg Lithiumaluminiumsilikat mit einer Korngröße von 75 µm, 4,5 kg Bariumsulfat, 1,25 kg Glaskugeln mit einer Korngröße von 30 µm und 1,5 kg Dodecylbenzolsulfonsäure gefüllt und bei ca. 500 U/min 10 min gemischt. Die Mischung wurde anschließend auf einem Kompaktor (Type 14-175, 10) der Fa. Amandus Kahl, 21465 Reinbek, Deutschland im Kollergang mit ca. 120 kg Durchsatz/Stunde zu staubfreien Granulaten kompaktiert (kalt verpreßt).

Diese Reinigungsmischung wurde zur Reinigung von Extrudern ZSK 28 der Fa. Coperion, Werner & Pfleiderer, Stuttgart, Deutschland und der Spritzgießmaschine Allrounder der Fa. Arburg , 72290 Loßburg, Deutschland verwendet. Der Extruder und die Spritzgießmaschine waren zuvor mit Rußkonzentraten mit 50 Gew.-% Rußanteil (in LDPE) verunreinigt worden. Anschließend wurde mit der oben genannten kompaktierten Reinigungsmischung der Extruder ZSK 28 mit einem Durchsatz von 4 kg/Stunde gereinigt. Die hierfür benötigte Reinigungsmischung betrug 800 g. Das nachfolgend zu verarbeitete Polyamid 66 natur zeigte keine Verunreinigung mit der Reinigungsmischung.

Nach Lagerung dieser Mischung von 8 Tagen ging die Reinigungswirkung zurück. Die nach 8 Tagen benötigte Menge an Reinigungsmischung betrug 1 850 g., um das gleiche Resultat wie am 1. Tag (d.h. vor der Lagerung) zu erhalten.

Die gleiche Reinigungsmischung wurde frisch hergestellt auf der verunreinigten Spritzgießmaschine eingesetzt. Nach 18 Zyklen (Anzahl gespritzte Prüfplatten) war die Maschine von dem Rußkonzentrat gereinigt. Das nachfolgend verarbeitete Polyamid 66 natur zeigte keine Verunreinigung mit der Reinigungsmischung.

Ebenso zeigte die gelagerte Reinigungsmischung nach 8 Tagen eine verringerte Reinigungskraft, weshalb eine erhöhte Anzahl von Reinigungszyklen erforderlich war, um das gleiche Resultat wie am 1. Tag zu erhalten. Nach 42 Zyklen (Anzahl gespritzte Prüfplatten) war die Maschine von dem Rußkonzentrat gereinigt.

### Beispiel 2

In einem Henschelmischer (100 l) wurden 25 kg Thermoflex S3002/60- 12*800 (Fa. PTS Plastic - Technologie - Service, Marketing und Vertriebs GmbH, 91587 Adelshofen, Deutschland), 5 kg Lithiumaluminiumsilikat mit einer Korngröße von 75 µm, 4,5 kg Bariumsulfat, 1,25 kg Glaskugeln mit einer Korngröße von 30 µm und 1,2 kg Zitronensäure gefüllt und bei ca. 500 U/min 10 min gemischt. Die Mischung wurde anschließend auf einem Kompaktor (Type 14-175, 10) der Fa. Amandus Kahl, im Kollergang mit ca 120 kg Durchsatz/Stunde zu staubfreien Granulaten kompaktiert (kalt verpreßt).

Diese Reinigungsmischung wurde zur Reinigung von Extrudern ZSK 28 der Fa. Coperion, Werner & Pfleiderer und der Spritzgießmaschine Allrounder der Fa. Arburg verwendet. Die Extruder und Spritzgießmaschine waren zuvor mit Rußkonzentraten mit 50 Gew.-% Rußanteil (in LDPE) verunreinigt worden.

Anschließend wurde mit der oben genannten kompaktierten Reinigungsmischung der Extruder ZSK 28 mit einem Durchsatz von 4 kg/Stunde gereinigt. Die hierfür benötigte Reinigungsmischung betrug 780 g. Das nachfolgend verarbeitete Polyamid 66 natur zeigte keine Verunreinigung mit der Reinigungsmischung.

Nach Lagerung dieser Reinigungsmischung von 8 Tagen ging die Reinigungswirkung zurück. Die nach 8 Tagen benötigte Menge an Reinigungsmischung betrug 1 800 g, um das gleiche Resultat wie am 1. Tag vor der Lagerung zu erhalten.

Die gleiche Reinigungsmischung wurde frisch hergestellt auf der Spritzgießmaschine eingesetzt. Nach 17 Zyklen (Anzahl gespritzte Prüfplatten) war die Maschine von dem Rußkonzentrat gereinigt. Das nachfolgend verarbeitete Polyamid 66 natur zeigte keine Verunreinigung mit der Reinigungsmischung. Ebenso zeigte die gelagerte Mischung nach 8 Tagen eine verringerte Reinigungskraft auf der Spritzgießmaschine, weshalb eine erhöhte Anzahl von Reinigungszyklen erforderlich war, um das gleiche Resultat wie am 1. Tag zu erhalten. Nach 45 Zyklen (Anzahl gespritzte Prüfplatten) war die Maschine von dem Rußkonzentrat gereinigt.

### Beispiel 3 (erfindungsgemäß)

Die Reinigungsmischung aus Beispiel 2 wurde mit allen Komponenten außer der Zitronensäure gemischt und staubfrei kompaktiert.

Anstelle der Zitronensäure wurde ein Masterbatch aus verkapselter Zitronensäure, bestehend aus 20 Gew.-% LDPE und 80 Gew.-% Zitronensäure, mit der kompaktierten Mischung gemischt. Der Masterbatch, bestehend aus 20 Gew.-% LDPE und 80 Gew.-% Zitronensäure, wurde hergestellt, indem die Komponenten auf einem Extruder ZSK28 bei 120°C extrudiert und stranggranuliert wurden (Masterbatchverfahren).

Die Reinigungsmischung zeigte die gleichen Reinigungseigenschaften wie in Beispiel 2.

Anschließend wurde mit der oben genannten kompaktierten erfindungsgemäßen Reinigungsmischung nach 8 Tagen Lagerung der verunreinigte Extruder ZSK 28 mit einem Durchsatz von 4 kg/Stunde gereinigt. Die hierfür benötigte Reinigungsmischung betrug 780 g. Das nachfolgend verarbeitete Polyamid 66 natur zeigte keine Verunreinigung mit der Reinigungsmischung.

Ebenso zeigte die gelagerte Mischung nach 8 Tagen die volle Reinigungskraft auf der Spritzgießmaschine Allrounder. Nach 17 Zyklen (Anzahl gespritzte Prüfplatten) war die Maschine von dem Rußkonzentrat gereinigt.

Somit war die Reinigungskraft des erfindungsgemäßen Reinigungsmittels unverändert, d.h. am Tag 8 genauso wie am Tag 1 vor der Lagerung.

### Vergleichsbeispiel 1 (aus WO 00/37236 Beispiel 2)

Es wurden 3 kg Reinigungsmischung entsprechend den Angaben aus WO 00/37236, Beispiel 2 Polyamid 6T/6 und Polystyrol im Mischungsverhältnis 15:85 auf der Spritzgießmaschine bei 220°C eingesetzt. Die Reinigungswirkung wie in WO 00/37236 Beispiel 2konnte nicht bestätigt werden, da das Polyamid 6T/6 Granulat die Nadelverschlußdüse verstopfte und diese erst bei 300 °C frei gespritzt werden konnte.

### Beispiel 4 (erfindungsgemäß)

In einer Wirbelschichtanlage ProCell 5 von der Fa. Glatt wurde die Zitronensäure bei ca. 80 °C bis 100 °C mit dem Polyethylenwachs PE520 (der Fa. Clariant, Frankfurt, Deutschland) verkapselt. Bei diesem Verfahren wurde die eingesetzte Zitronensäure in der Sprühgranulation mit Wachs beschichtet. Die Granulatgröße betrug nach der Verkapselung 1 mm bis 3 mm.

Diese verkapselte (gecoatete) Zitronensäure wurde mit einem durch Extrusion (ZSK 28-Zweiwellenextruder) und Stranggranulation erhaltenen Granulatgemisch bestehend aus 34,5 kg Thermoflex S3002/60-12*800 natur (Fa. PTS Plastic - Technologie - Service, Marketing und Vertriebs GmbH), 1,7 kg Glaskugeln mit einer Korngröße von 30 µm, 6,3 kg Schwerspat mit einer Korngröße von 30 µm und 7,0 kg Lithiumaluminiumsilikat mit einer Korngröße von 75 µm gemischt, wodurch die Reinigungsmischung bereitgestellt wurde.

Die Reinigungsmischung aus verkapselter Zitronensäure und Granulat wurde nach dem Mischen und nach 14 Tagen Lagerung auf dem Extruder ZSK 28 mit einem Durchsatz von 4 kg/Stunde getestet. Der Extruder wurde zuvor mit einem Rußkonzentrat mit 50 Gew.-% Rußanteil verunreinigt. Die für die Reinigung des verunreinigten Extruders ZSK28 benötigte Reinigungsmischung betrug unmittelbar nach Herstellung der Reinigungsmischung 790 g bzw. nach 14-tägiger Lagerung 780 g.

Ebenso zeigte die frische, wie auch eine gelagerte Reinigungsmischung nach 14 Tagen die volle Reinigungskraft auf der mit dem Rußkonzentrat mit 50 Gew.-% Rußanteil verunreinigten Spritzgießmaschine. Nach 17 Zyklen (Anzahl gespritzter Prüfplatten) war die Maschine von dem Rußkonzentrat gereinigt, unabhängig von der Lagerung der Reinigungsmischung. Es kam mithin zu keinem Verlust der Reinigungskraft durch die Lagerung der Reinigungsmischung.

Tabelle 1 zeigt die erfindungsgemäßen Beispiele 5 bis 11. Die angegebenen Komponenten wurden analog dem Beispiel 3 im Henschelmischer bei 500 U/min gemischt und sodann auf einem Zweiwellenextruder ZSK 28 von Coperion, Werner & Pfleiderer mit einem Durchsatz von 4 kg/h extrudiert und stranggranuliert. Zu dem Granulat wurde der Masterbatch, bestehend aus 20 Gew.-% LDPE und 80 Gew.-% Zitronensäure, hinzugegeben. Die jeweils so hergestellte Reinigungsmischung wurde auf der ZSK 28 von Coperion Werner & Pleiderer und auf der Spritzgießmaschine Allrounder von Arburg getestet, die zuvor mit dem Rußkonzentrat verunreinigt wurden.

**Tabelle 1**

| **Beispiele (erfindungsgemäß)** | | | | | | | |
|---|---|---|---|---|---|---|---|
| | 5 | 6 | 7 | 8 | 9 | 10 | 11 |
| **Komponenten der Reinigungsmischung (kg)** | | | | | | | |
| Thermoflex S 3002/60-12*800 natur | 34,5 | 34,0 | 25,0 | 26,5 | 32,5 | 24,0 | 30 |
| Glaskugeln mit Korngröße von 30 µm | 6,7 | 1,7 | 2,6 | -- | -- | 2,4 | 2 |
| Schwerspat | 6,3 | -- | 9,5 | 9,5 | 8,0 | 11,2 | 5 |
| Lithiumaluminiumsilikat | -- | 7,0 | 10,5 | 10,0 | 7,5 | 10,0 | 11 |
| Zitronensäure-Masterbatch (20/80) hergestellt wie in Beispiel 3 | 2,5 | 2,0 | 2,4 | 1,5 | 1,0 | 1,2 | 1,6 |

| **Bedingungen** | | | | | | | |
|---|---|---|---|---|---|---|---|
| **Auf ZSK 28/Durchsatz 4kg/h** | | | | | | | |
| Verunreinigung mit | Rußkonzentrat* | TPE* | PA66* | ABS* | PA6* | PPS* | PBT* |
| Temperatur (°C) | 260 | 240 | 280 | 220 | 260 | 350 | 265 |
| erforderliche Menge an Reinigungsmischung (g) frisch gemischt | 800 | 760 | 820 | 780 | 750 | 810 | 770 |
| erforderliche Menge an Reinigungsmischung (g) nach 14 Tage Lagerung | 810 | 755 | 815 | 780 | 755 | 810 | 775 |
| Nachfolgendes Polymer | PA6 | PP | PC | HDPE | HIPS | PA46 | TPE |
| | | | | | | | |

| **Auf Arburg Allrounder** | | | | | | | |
|---|---|---|---|---|---|---|---|
| Reinigungszyklen | | | | | | | |
| frisch gemischt | 18 | 20 | 17 | 19 | 16 | 20 | 15 |
| nach 14 Tage Lagerung | 18 | 21 | 17 | 18 | 16 | 21 | 16 |

| | | | | | | | |
|---|---|---|---|---|---|---|---|
| Rußkonzentrat* mit einem Rußanteil von 50 Gew.-% auf LDPE von Granula Polymer GmbH, 64823 Heubach, Deutschland TPE* Thermoflex A1 schwarz von PTS Plastic - Technologie - Service, Marketing und Vertriebs GmbH, 91587 Adelshofen, Deutschland PA66* Creamid A3 H2 G6 (30% Glasfaser) schwarz von PTS Plastic - Technologie - Service, Marketing und Vertriebs GmbH, 91587 Adelshofen, Deutschland ABS* Crealac schwarz von PTS Plastic - Technologie - Service, Marketing und Vertriebs GmbH, 91587 Adelshofen, Deutschland PA6* Creamon B3 H2 M6 (30% Mineral) schwarz von PTS Plastic - Technologie - Service, Marketing und Vertriebs GmbH, 91587 Adelshofen, Deutschland PPS* Ryton R4 (40% Glasfaser) schwarz von Pro-Plast Kunststoff GmbH, 64347 Griesheim, Deutschland PBT* Createc schwarz von PTS Plastic - Technologie - Service, Marketing und \/ertriehs GmbH | | | | | | | |

### Beispiel 12 (erfindungsgemäß)

In einem Henschelmischer (100 l) wurden 40 kg TPE (TF 50E*700, der Fa. PTS Plastic - Technologie - Service, Marketing und Vertriebs GmbH, Adelshofen, Deutschland) mit 2 kg Zitronensäure gemischt und auf einem Extruder ZSK 58 mit Wasserringgranulierung granuliert.

In einer separaten Mischung wurden in einem Henschelmischer (100 l) 20 kg Kreide mit einer Korngröße von 5 µm (der Fa. Omya Peralta GmbH, 22085 Hamburg, Deutschland), 5 kg Lithiumaluminiumsilikat mit einer Korngröße von 50 µm, 4,5 kg Bariumsulfat, 1,25 kg Glaskugeln mit einer Korngröße von 30 µm gemischt. Diese Mischung wurde in einer Wirbelschichtanlage ProCell 5 von der Fa. Glatt bei ca. 80 °C bis 100 °C mit Montanwachs verkapselt. Bei diesem Verfahren wurde die eingesetzte Mischung in der Sprühgranulation mit Wachs beschichtet. Die Größe des beschichteten Granulats betrug 1 mm bis 3 mm.

Beide Granulate (TPE + Zitronensäure) und Sprühgranulat (mit den verkapselten mineralischen Partikeln) wurden gemischt. Die frisch hergestellte Reinigungsmischung als auch eine 14 Tage gelagerte Reinigungsmischung wurden auf dem Extruder ZSK 28 mit einem Durchsatz von 4 kg/Stunde getestet. Der Extruder wurde zuvor mit einem Rußkonzentrat von 50 Gew.-% Rußanteil verunreinigt.

Die für die Reinigung des Extruders ZSK 28 benötigte Menge an Reinigungsmischung betrug unmittelbar nach der Herstellung des Reinigungsmittels 780 g bzw. nach 14-tägiger Lagerung 790 g.

Ebenso zeigte eine frisch hergestellte Reinigungsmischung sowie eine für 14 Tagen gelagerte Reinigungsmischung die volle Reinigungskraft auf der Spritzgießmaschine Allrounder. Nach 17 Zyklen (Anzahl gespritzter Prüfplatten) war die Maschine jeweils von dem Rußkonzentrat gereinigt.

Die Reinigungseigenschaft der erfindungsgemäßen Reinigungsmischung war in beiden Fällen sehr gut und es kam mithin zu keiner Abnahme bei der Reinigungskraft durch die Lagerung.

In allen erfindungsgemäßen Beispielen konnte gezeigt werden, dass die Reinigungseigenschaften des erfindungsgemäßen Reinigungsmittels (Reinigungsmischung) für eine Reinigung von Spritzgießmaschinen und Extrudern Reinigungsmitteln ohne Verkapselung überlegen ist.

Auch konnte gezeigt werden, dass die Reinigungskraft nur unter Trennung von mineralischen Partikeln und kristalliner freier Säure durch Verkapseln (Coaten) von kristalliner freier Säure und/oder der mineralischen Partikel erhalten bleibt.

## Patentansprüche

1. Reinigungsmittel,
**dadurch gekennzeichnet,**
**dass** das Reinigungsmittel mineralische Partikel, kristalline freie Säure sowie organisches Polymer umfasst, wobei die mineralischen Partikel und/oder die kristalline freie Säure wenigstens teilweise eine Verkapselung aufweisen, wobei der Anteil an mineralischen Partikeln in einem Bereich von 2 bis 70 Gew.-%, der Anteil an kristalliner freier Säure in einem Bereich von 0,05 bis 10 Gew.-%, der Anteil an Verkapselung in einem Bereich von 0,01 bis 10 Gew.% und
der Anteil an organischem Polymer in einem Bereich von 10 bis 97,94 Gew.-% liegt, wobei sich die Gew.-% auf das Gesamtgewicht des Reinigungsmittels beziehen und insgesamt 100 Gew.-% ergeben.

2. Reinigungsmittel nach Anspruch 1,
**dadurch gekennzeichnet,**
**dass** die mineralischen Partikel wenigstens teilweise alkalische mineralische Partikel sind.

3. Reinigungsmittel nach Anspruch 2,
**dadurch gekennzeichnet,**
**dass** die alkalischen mineralischen Partikel wenigstens teilweise eine Verkapselung aufweisen.

4. Reinigungsmittel nach einem der vorhergehenden Ansprüche,
**dadurch gekennzeichnet,**
**dass** die kristalline freie Säure als kristalline freie organisch-chemische Säure vorliegt.

5. Reinigungsmittel nach einem der vorhergehenden Ansprüche,
**dadurch gekennzeichnet**,
das die kristalline freie Säure kristalline freie Carbonsäure umfasst oder ist.

6. Reinigungsmittel nach einem der vorhergehenden Ansprüche,
**dadurch gekennzeichnet,**
**dass** die kristalline freie Säure aus der Gruppe, die aus kristallinen freie organischen Mono-, Di- und Tricarbonsäuren sowie Mischungen davon besteht, ausgewählt wird.

7. Reinigungsmittel nach einem der vorhergehenden Ansprüche,
**dadurch gekennzeichnet,**
**dass** die kristalline freie Säure wenigstens teilweise eine Verkapselung aufweiset.

8. Reinigungsmittel nach einem der vorhergehenden Ansprüche,
**dadurch gekennzeichnet**,
das die Verkapselung organisches Polymer und/oder Wachs umfasst oder ist.

9. Reinigungsmittel nach einem der vorhergehenden Ansprüche,
**dadurch gekennzeichnet,**
**dass** die mineralischen Partikel eine mittlere Partikelgröße aus einem Bereich von 1 bis 1000 µm, vorzugsweise von 5 bis 500 µm, weiter bevorzugt von 10 bis 250 µm, aufweisen.

10. Reinigungsmittel nach einem der vorhergehenden Ansprüche,
**dadurch gekennzeichnet,**
**dass** das organische Polymer ein oder mehrere thermoplastische Polymer(e) umfasst.

11. Reinigungsmittel nach einem der vorhergehenden Ansprüche,
**dadurch gekennzeichnet,**
**dass** das Reinigungsmittel zusätzlich Additiv(e) umfasst.

12. Reinigungsmittel nach einem der vorhergehenden Ansprüche,
**dadurch gekennzeichnet,**
**dass** das Reinigungsmittel als Pulver, Granulat oder in kompaktierter Form vorliegt.

13. Verwendung eines Reinigungsmittels, das mineralische Partikal, Kristalline freie Säure sowie-organisches Polymer umfasst, wobei die mineralischen Partikel und/oder die Kristalline freie Säure wenigstens teilweise eine Verkoptelung aufweisen, zur Reinigung von Vorrichtungen zur Kunststoffherstellung oder Kunststoffverarbeitung, insbesondere von Extrudern und Spritzgießmaschinen.

14. Verfahren zum Reinigen einer Vorrichtung zur Kunststoffherstellung oder Kunststoffverarbeitung, insbesondere von Extrudern und Spritzgießmaschinen, mit einem Reinigungsmittel wobei das Reinigungsmittel, das mineralische Partikal, Kristalline freie Säure sowie-organisches Polymer umfasst, wobei die mineralischen Partikel und/oder die Kristalline freie Säure wenigstens teilweise eine Verkoptelung aufweisen, unter Druck- und/oder Temperaturerhöhung durch die Vorrichtung unter Aufbrechen der Verkapselung geführt wird, so dass die mineralischen Partikel und/oder die kristalline freie Säure wenigstens teilweise freigesetzt werden.

15. Verfahren nach Anspruch 14,
**dadurch gekennzeichnet,**
**dass** die kristalline freie Säure kristalline Carbonsäure ist und während des Reinigens der Vorrichtung zur Kunststoffherstellung oder Kunststoffverarbeitung wenigstens teilweise decarboxyliert.

16. Verfahren zur Herstellung des Reinigungsmittel nach einem der Ansprüche 1 bis 12,
**dadurch gekennzeichnet,**
**dass** mineralische Partikel, kristalline freie Säure sowie organisches Polymer und optional Additive unter Bereitstellung des Reinigungsmittels miteinander vermengt werden, wobei die mineralischen Partikel und/oder die kristalline freie Säure wenigstens teilweise eine Verkapselung aufweisen.

17. Verfahren nach Anspruch 16,
**dadurch gekennzeichnet,**
**dass** das Reinigungsmittel granuliert und/oder kompaktiert wird.

## Claims

1. Cleaning agent,
**characterised in that**,
the cleaning agent comprises mineral particles, crystalline free acid and an organic polymer, wherein the mineral particles and/or the crystalline free acid at least in part have an encapsulation, wherein the proportion of mineral particles is in a range of 2 to 70 % b. w., the proportion of crystalline free acid is in a range of 0.05 to 10 % b. w., the proportion of encapsulation is in a range of 0.01 to 10 % b.w. and the proportion of organic polymer is in a range of 10 to 97.94 % b. w., wherein the % b. w. is relative to the total weight of the cleaning agent and results in 100 % b. w. in total.

2. Cleaning agent according to claim 1,
**characterised in that**,
the mineral particles are at least in part alkaline mineral particles.

3. Cleaning agent according to claim 2,
**characterised in that**,
the alkaline mineral particles at least in part have an encapsulation.

4. Cleaning agent according to one of the preceding claims,
**characterised in that**,
the crystalline free acid exists as a crystalline free organo-chemical acid.

5. Cleaning agent according to one of the preceding claims,
**characterised in that**,
the crystalline free acid comprises, or is, crystalline free carboxylic acid.

6. Cleaning agent according to one of the preceding claims,
**characterised in that**,
the crystalline free acid is selected from the group consisting of crystalline free organic mono, di and tricarboxylic acids, as well as mixtures thereof.

7. Cleaning agent according to one of the preceding claims,
**characterised in that**,
the crystalline free acid has in part at least one encapsulation.

8. Cleaning agent according to one of the preceding claims,
**characterised in that**,
the encapsulation comprises, or is, an organic polymer and/or wax.

9. Cleaning agent according to one of the preceding claims,
**characterised in that**,
the mineral particles have a median particle size ranging from 1 to 1000 µm, preferably from 5 to 500 µm and particularly preferably from 10 to 250 µm.

10. Cleaning agent according to one of the preceding claims,
**characterised in that**,
the organic polymer comprises one or more thermoplastic polymer(s).

11. Cleaning agent according to one of the preceding claims,
**characterised in that**,
the cleaning agent additionally comprises (an) additive(s).

12. Cleaning agent according to one of the preceding claims,
**characterised in that**,
the cleaning agent exists as powder, granules or in compacted form.

13. Use of a cleaning agent comprising mineral particles, crystalline free acid and an organic polymer, wherein the mineral particles and/or the crystalline free acid at least in part have an encapsulation, for cleaning devices for the production or processing of plastic, in particular extruders and injection moulding machines.

14. Method for cleaning a device for the production or processing of plastic, in particular extruders and injection moulding machines with a cleaning agent, wherein the cleaning agent comprising mineral particles, crystalline free acid and an organic polymer, wherein the mineral particles and/or the crystalline free acid at least in part have an encapsulation, are lead through the device under a pressure and/or temperature increase by breaking the encapsulation, such that the mineral particles and/or the crystalline free acid are at least in part discharged.

15. Method according to claim 14,
**characterised in that**,
the crystalline free acid is crystalline carboxylic acid and at least in part decarboxylates during the cleaning of the device for production or processing of plastic.

16. Method for producing the cleaning agent according to one of claims 1 to 12,
**characterised in that**,
mineral particles, crystalline free acid and the organic polymer and, optionally, additives are mixed together under provision of the cleaning agent, wherein the mineral particles and/or the crystalline free acid at least in part have an encapsulation.

17. Method according to claim 16,
**characterised in that**,
the cleaning agent is granulated and/or compacted.

## Revendications

1. Produit de nettoyage, **caractérisé en ce que** ledit produit de nettoyage comporte des particules minérales, un acide libre cristallin, ainsi qu'un polymère organique, les particules minérales et/ou l'acide libre cristallin comportant au moins en partie une encapsulation, la teneur en particules minérales se situant dans une plage de 2 à 70 % en poids, la teneur en acide libre cristallin se situant dans une plage de 0,05 à 10 % en poids, la teneur de l'encapsulation se situant dans une plage de 0,01 à 10 % en poids et la teneur en polymère organique se situant dans une plage de 10 à 97,94 % en poids, le pourcentage en poids se rapportant au poids total du produit de nettoyage et donnant en totalité 100 % en poids.

2. Produit de nettoyage selon la revendication 1, **caractérisé en ce que** les particules minérales sont au moins en partie des particules minérales alcalines.

3. Produit de nettoyage selon la revendication 2, **caractérisé en ce que** les particules minérales alcalines comportent au moins en partie une encapsulation.

4. Produit de nettoyage selon l'une quelconque des revendications précédentes, **caractérisé en ce que** l'acide libre cristallin est présent sous forme d'acide organo-chimique libre cristallin.

5. Produit de nettoyage selon l'une quelconque des revendications précédentes, **caractérisé en ce que** l'acide libre cristallin contient ou est un acide carboxylique libre cristallin.

6. Produit de nettoyage selon l'une quelconque des revendications précédentes, **caractérisé en ce que** l'acide libre cristallin a été choisi dans le groupe qui contient des monoacides carboxyliques, des biacides carboxyliques et des triacides carboxyliques organiques cristallins libres, ainsi que des mélanges de ceux-ci.

7. Produit de nettoyage selon l'une quelconque des revendications précédentes, **caractérisé en ce que** l'acide libre cristallin comporte au moins en partie une encapsulation.

8. Produit de nettoyage selon l'une quelconque des revendications précédentes, **caractérisé en ce que** l'encapsulation contient ou est un polymère organique et/ou une cire.

9. Produit de nettoyage selon l'une quelconque des revendications précédentes, **caractérisé en ce que** les particules minérales ont une grosseur moyenne dans une plage de 1 à 1000 µm, de préférence de 5 à 500 µm, encore mieux de 10 à 250 µm.

10. Produit de nettoyage selon l'une quelconque des revendications précédentes, **caractérisé en ce que** le polymère organique contient un ou plusieurs polymères thermoplastiques.

11. Produit de nettoyage selon l'une quelconque des revendications précédentes, **caractérisé en ce que** ledit produit de nettoyage contient, en plus, un ou des additif(s).

12. Produit de nettoyage selon l'une quelconque des revendications précédentes, **caractérisé en ce que** ledit produit de nettoyage est disponible sous forme de poudre, de granulés ou dans une forme compactée.

13. Utilisation d'un produit de nettoyage qui contient des particules minérales, un acide libre cristallin, ainsi qu'un polymère organique, les particules minérales et/ou l'acide libre cristallin comportant au moins en partie une encapsulation, pour le nettoyage de dispositifs destinés à la fabrication de matières plastiques ou au traitement de matières plastiques, en particulier des extrudeuses et des machines de moulage par injection.

14. Procédé pour le nettoyage d'un dispositif destiné à la fabrication de matières plastiques ou au traitement de matières plastiques, en particulier des extrudeuses et des machines de moulage par injection, avec un produit de nettoyage, ledit produit de nettoyage, qui contient des particules minérales, un acide libre cristallin, ainsi qu'un polymère organique, parmi lesquels les particules minérales et/ou l'acide libre cristallin comportent au moins en partie une encapsulation, étant guidé à travers le dispositif sous l'effet d'une augmentation de pression et/ou de température et moyennant l'éclatement de l'encapsulation, de telle sorte que les particules minérales et/ou l'acide libre cristallin sont libérés au moins en partie.

15. Procédé selon la revendication 14, **caractérisé en ce que** l'acide libre cristallin est un acide carboxylique libre et décarboxylise au moins en partie pendant le nettoyage du dispositif destiné à la fabrication de matières plastiques ou au traitement de matières plastiques.

16. Procédé de fabrication du produit de nettoyage selon l'une quelconque des revendications 1 à 12, **caractérisé en ce que** des particules minérales, un acide cristallin libre, ainsi qu'un polymère organique et, en option, des additifs sont mélangés entre eux pour la préparation du produit de nettoyage, les particules minérales et/ou l'acide cristallin libre comportant au moins en partie une encapsulation.

17. Procédé selon la revendication 16, **caractérisé en ce que** le produit de nettoyage est granulé et/ou est compacté.
